# EUROPÄISCHE PATENTSCHRIFT

(11) **EP 1 019 934 B1**
(45) Veröffentlichungstag und Bekanntmachung des Hinweises auf die Patenterteilung: **09.01.2002**
(21) Anmeldenummer: 98947537.1
(22) Anmeldetag: 17.09.1998
(51) Int. Cl.: H01H 85/46, H01H 85/044

(54) **SCHALTUNGSANORDNUNG UND VERFAHREN ZUM BETREIBEN EINES SICHERUNGSELEMENTS**
CIRCUIT ARRANGEMENT AND PROCESS FOR OPERATING A SAFETY FUSE
CIRCUIT ET PROCEDE DE FONCTIONNEMENT D'UN FUSIBLE

(30) Priorität: 10.10.1997 DE 19744765
(43) Veröffentlichungstag der Anmeldung: 19.07.2000
(73) Patentinhaber: DaimlerChrysler AG, 70567 Stuttgart (DE)
(72) Erfinder: MÄCKEL, Rainer, D-53639 Königswinter (DE); SCHULZ, Thomas, D-72669 Unterensingen (DE); BLESSING, Alf, D-73092 Heiningen (DE)
(74) Vertreter: Maute, Hans-Jürgen, Dipl.-Ing.
(86) Internationale Anmeldenummer: EP9805972
(87) Internationale Veröffentlichungsnummer: WO9919895

(56) Entgegenhaltungen:
- EP-A- 0 096 834
- EP-A- 0 188 695
- EP-A- 0 725 412
- DE-A- 19 527 997
- DE-U- 9 206 446
- GB-A- 2 123 627

## Beschreibung

Die Erfindung betrifft eine Schaltungsanordnung und ein Verfahren zum Betreiben einer Schaltungsanordnung gemäß dem Oberbegriff der unabhängigen Ansprüche 1 und 7.

Sicherungsanordnungen mit Vorsicherungen zum Schutz von Leitungen, insbesondere in Kraftfahrzeugen, benötigen je nach Art der Verkabelung Vorsicherungen mit teilweise sehr hohen Auslösewerten. Insbesondere Schmelzsicherungen weisen jedoch konstruktionsbedingt ein ungünstiges Auslöseverhalten auf. Bei geringen oder moderaten Überströmen schalten sie teilweise sehr spät oder überhaupt nicht, bei pulsartigen, hohen Überströmen dagegen sehr schnell ab, obwohl ein kurzzeitiger Überstrom von den Leitungen toleriert werden könnte.

Um das Auslöseverhalten zu verbessern, sind aktive Auslöseverfahren mit elektronischen Auswerte- und Ansteuerschaltungen bekannt. So wird z.B. eine Sicherung ausgelöst, indem ein Transistor geschaltet wird und als Folge zusätzlich zum Überstrom ein erhöhter Strom durch die Sicherung fließt. Ein Problem dieser Anordnung ist die mangelnde Zuverlässigkeit der Auslösung mittels eines Transistors, insbesondere kann es zum unbeabsichtigten Auslösen einer Sicherung kommen, wenn etwa die Auswerte- oder Ansteuerschaltung einen Fehler aufweist oder der Schalttransistor selbst durch Überspannung beschädigt ist. Besonders im Betrieb eines Fahrzeugs kann dies zu gefährlichen Ausfällen von Bedienelementen und/oder für die Fahrzeugsicherheit wichtigen Komponenten führen.

In der DE-A1-195 27 997 ist eine Anordnung offenbart, mit der das Auslösen einer Schmelzsicherung besser vorgebbar ist. Dabei wird ein parallel zur abzusichernden Leitung geschalteter Thyristor eingeschaltet, sobald der elektrische Strom durch die Sicherung einen Schwellwert überschreitet. Dadurch fließt ein zusätzlicher, hoher Überstrom in der Sicherung, der zum Auslösen der Sicherung führt. Bei hohen Sicherungswerten ist jedoch nicht sichergestellt, daß z.B. eine gealterte Fahrzeugbatterie den für den Thyristor zusätzlich notwendigen Überstrom überhaupt zur Verfügung stellen kann, und die Schaltung ist nicht gegen den Ausfall der Auswerteschaltung und/oder des Thyristors geschützt.

Der Erfindung liegt die Aufgabe zugrunde, eine Schaltungsanordnung und ein Verfahren zum Betreiben einer Schaltungsanordnung anzugeben, mit der eine erhöhte Sicherheit gegen ein unbeabsichtigtes Auslösen der Sicherung weitgehend erreicht werden kann.

Die Aufgabe wird durch die Merkmale der unabhängigen Ansprüche gelöst. Weiterführende und vorteilhafte Ausgestaltungen sind den weiteren Ansprüchen und der Beschreibung zu entnehmen.

Um die Sicherheit der Auslösung zu verbessern, wird erfindungsgemäß ein Sicherungselement mit einer Auslöseeinheit ausgelöst, die nur dann aktiviert wird, wenn in einem Fehlerfall, bei dem die Sicherung ausgelöst werden soll, mindestens zwei getrennte, unabhängige Fehlersignale detektiert werden,
wobei ein erstes Fehlersignal mit einer Temperaturgröße der Sicherung und ein zweites Fehlersignal mit elektrischen Größen der Sicherung verknüpftist, und die von den Sensoreinheiten zur Überwachung und/oder zum Detektieren des ersten und des zweiten Fehlersignals gesteuerten Schalteinrichtungen in Serie geschaltet, bzw. in einer logischen "UND"-Verknüpfung miteinander zusammengeschaltet sind.

Bevorzugt ist das mit der Temperatur verknüpftes Fehlersignal das Überschreiten einer vorgegebenen maximal zulässigen Temperatur der Sicherung und/oder einer maximal zulässigen Änderungsgeschwindigkeit der Sicherungstemperatur. Bevorzugt ist das mit den elektrischen Größen verknüpftes Fehlersignal das Überschreiten eines vorgegebenen Strom- und/oder Spannungsschwellwertes an der Sicherung. In diesem Fall löst die Auslöseeinheit nur dann die Sicherung aus, wenn eine zu hohe Temperatur an der Sicherung auftritt und/oder sich die Temperatur der Sicherung zu schnell erhöht und gleichzeitig auch ein Stromschwellwert und/oder ein Spannungsschwellwert an der Sicherung überschritten ist. Damit ist sichergestellt, daß ein fehlerhafter Stromsensor und/oder eine fehlerhafte Ansteuerschaltung nicht zu einer unbeabsichtigten Sicherungsauslösung führen kann.

Die Verknüpfung von Temperatur und elektrischen Größen der Sicherung, insbesondere einem Stromfluß durch die Sicherung oder Spannungsabfall über der Sicherung, ist besonders günstig, da ein erhöhter Stromfluß auch zu einer erhöhten thermischen Belastung und damit zur Erwärmung der Sicherung führt.

Eine bevorzugte Auslöseeinheit ist ein Schaltelement, wie ein Schütz, ein Relais, ein Thyristor und /oder ein Transistor, das einen Kurzschluß von der zu schützenden Leitung gegen Masse schaltet. Eine weitere bevorzugte Auslöseeinheit ist ein Heizelement, welches die Sicherung, insbesondere eine Schmelzsicherung, zum Auslösen der Sicherung fremdbeheizt. Eine weitere bevorzugte Auslöseeinheit ist eine Zündeinheit zum Zünden eines Reaktionselements, welches die Sicherung zumindest mittelbar auslöst. Durch letztere wird bei geringer Bealstung der Batterie ein zuverlässiges Auslösen der Sicherung erreicht.

Im folgenden sind die Merkmale, soweit sie für die Erfindung wesentlich sind, eingehend erläutert und anhand von Figuren näher beschrieben. Es zeigen
- Fig. 1: eine erfindungsgemäße Schaltungsanordnung,
- Fig. 2: eine erfindungsgemäße Schaltungsanordnung mit einem integrierten Temperaturfühler,
- Fig. 3: eine erfindungsgemäße Schaltungsanordnung mit Kalibriereinrichtung.

Die Erfindung ist im folgenden im wesentlichen anhand von Schmelzsicherungen mit Schmelzleiter beschrieben, soll jedoch nicht darauf eingeschränkt sein. Insbesondere ist sie auch für bimetallartige Sicherungstypen oder andere, selbstrücksetzende Sicherungstypen geeignet.

Um die Sicherheit der Sicherungsauslösung zu erhöhen, wird ein erfindungsgemäßes Sicherungselement mit einem Auslöseelement ausgelöst, das nur dann auslöst, wenn im Auslösefall zwei getrennte, bevorzugt unabhängige Fehlersignale auftreten.

Ein erstes bevorzugtes Signal, das günstig als Fehlersignal des Sicherungselements verwendbar ist, ist der Strom, der durch das Sicherungselement fließt und/oder die Spannung, die über dem Sicherungselement abfällt. Ein zweites bevorzugtes, als Fehlersignal geeignetes Signal ist die Temperatur und/oder die Geschwindigkeit der Temperaturänderung des Sicherungselements. Es wird überwacht, ob ein Schwellwert eines Stroms oder einer Spannung überschritten ist und/oder ob sich eine unerlaubt hohe Temperatur oder eine zu schnelle Temperaturerhöhung am Sicherungselement eingestellt hat. Wird z.B. sowohl ein Überstrom als auch eine Übertemperatur festgestellt, liegt ein gültiger Auslösefall vor, das Auslöseelement kann aktiviert und damit das Sicherungselement ausgelöst werden. Es kann dann davon ausgegangen werden, daß auch die zu schützende Leitung und/oder ein fehlerhafter Verbraucher erhöhte Temperatur aufweisen und abzuschalten sind. Wird insbesondere durch einen defekten Stromsensor fälschlicherweise ein zu hoher Strom durch das Sicherungselement angezeigt, so wird ein unerwünschte Sicherungsauslösung vermieden, wenn nicht gleichzeitig eine überhöhte Temperatur der Sicherung und/oder ein schneller Temperaturanstieg in der Sicherung festgestellt ist.

Vorzugsweise ist eine erste von einer ersten Sensoreinheit zur Erkennung und/oder Überwachung eines ersten Fehlersignals gesteuerte Schalteinrichtung sowohl in Serie mit einer zweiten von einer zweiten Sensoreinheit zur Erkennung und/oder Überwachung eines zweiten Fehlersignals gesteuerten Schalteinrichtung als auch in Serie mit einer Auslöseeinheit zum Auslösen einer Sicherung geschaltet, wobei Sensoreinheiten und Schalteinrichtungen bevorzugt getrennt, besonders bevorzugt unabhängig voneinander sind.

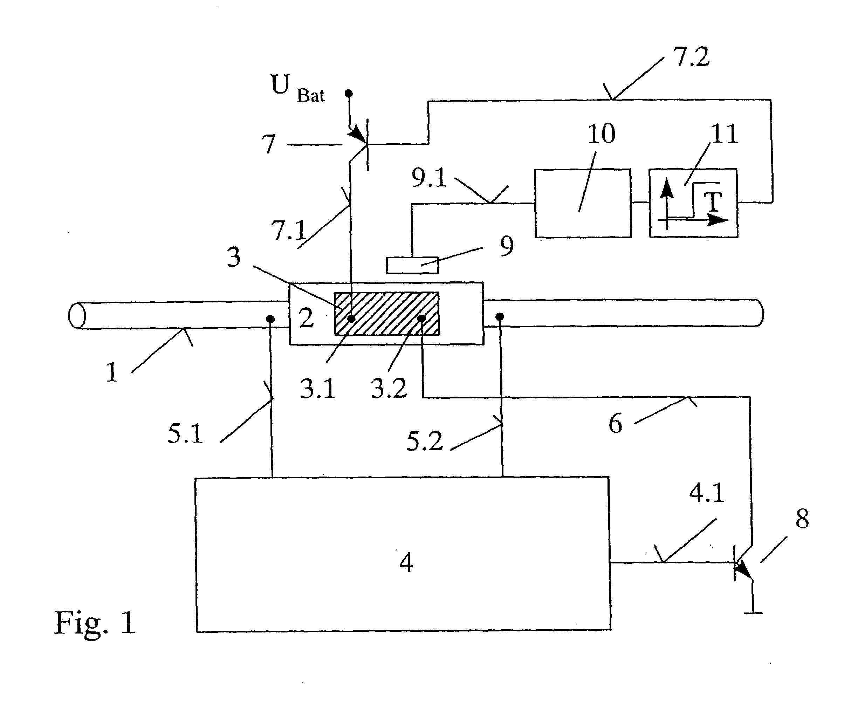

In Fig. 1 ist eine erfindungsgemäße Schaltungsanordnung dargestellt, wie sie beispielsweise in Kraftfahrzeugen eingesetzt werden kann. In einem stromdurchflossenen Leiter 1 ist ein Sicherungselement 2 angeordnet. Benachbart zum Sicherungselement 2 ist ein Auslöseelement 3 angeordnet, welches zum Fremdauslösen der Sicherung 2 vorgesehen ist. Parallel zum Sicherungselement 2 ist ein Stromsensor 4 angeschlossen, der mit Anschlüssen 5.1 und 5.2 beidseits des Sicherungselements 2 mit der Leitung 1 verbunden ist. Mit den Anschlüssen 5.1, 5.2 wird die Spannung über dem Sicherungselement 2 abgegriffen, wobei aus dem Spannungswert der Strom durch das Sicherungselement 2 bestimmt wird.

Die Auslöseeinheit 3 wird insbesondere durch ein Heizelement mit einem Heizleiter gebildet, welcher das Sicherungselement 2 insbesondere im Bereich seines Schmelzleiters fremdbeheizen kann und der im Auslösefall den Schmelzleiter durch Wärmestrahlung und/oder Wärmeleitung zum Durchschmelzen bringt. Dabei wird das Sicherungselement 2 bei einem Nennstrom, der kleiner als oder höchstens gleich groß ist wie sein bauartbedingter nominaler Auslösestrom, zuverlässig ausgelöst.

Ein Transistor 8 ist mit seinem Emitter mit der Masse und über die Leitung 6 mit seinem Kollektor mit dem Kontakt 3.2 der Auslöseeinheit 3 verbunden. Die Basis des Transistors 8 ist mit dem Stromsensor 4 verbunden. Der Kontakt 3.1 der Auslöseeinheit 3 ist mit dem Kollektor des Transistors 7 verbunden, dessen Emitter mit der Versorgungsspannung, insbesondere der positiven Batteriespannung U_{bat}, kontaktiert ist und dessen Basis von einem Komparator 11 angesteuert wird.

Der Stromsensor 4 ist über eine übliche, nicht näher dargestellte interne Auslöseschaltung dazu vorgesehen, den Transistor 8 durchzuschalten, sofern ein Überstrom detektiert wird. Die Temperatur des Sicherungselements 2 wird mit einem Temperatursensor 9 bestimmt. Der Temperatursensor 9 ist vorzugsweise ein PT-100-Widerstand, eine Infrarotdiode, ein Bipolartransistor und/oder eine pn-Diode. Über die Leitung 9.1 steuert der Temperaturfühler 9 die Auswerteeinheit 10, so daß z.B. aus der Höhe des temperaturabhängigen Signals die Temperatur des Sicherungselements 2 bestimmt werden kann. Überschreitet die Temperatur T des Sicherungselements 2 einen bestimmten Grenzwert Tₘₐₓ, so wird der Transistor 7 durch die Komparatoreinheit 11 stromleitend durchgeschaltet. Nur wenn beide Transistoren 7 und 8 eingeschaltet sind, wird ein Stromfluß durch die Auslöseeinheit 3 möglich und somit die Sicherung 2 aufgetrennt. Ist nur einer der Transistoren 7, 8 eingeschaltet, verriegelt der andere die Auslöseeinheit 3 und verhindert ein Auslösen der Sicherung 2.

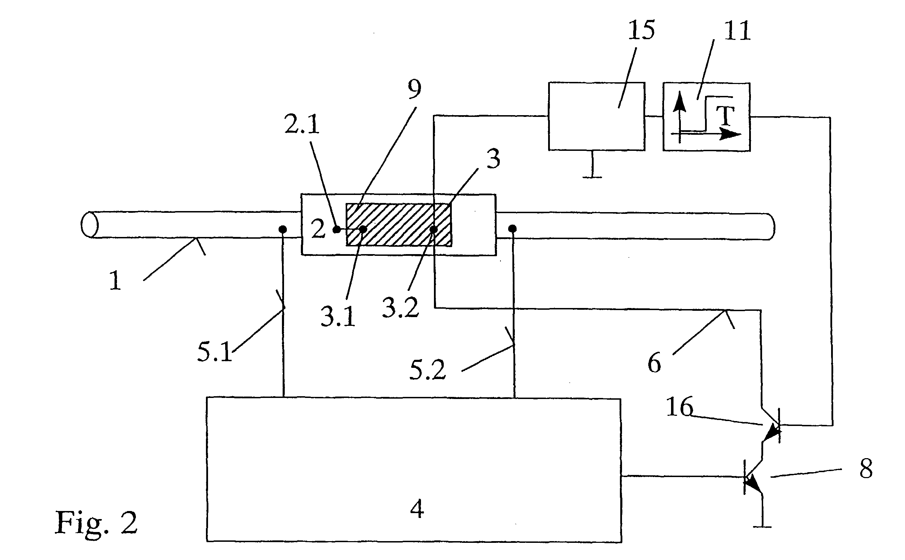

Eine besonders vorteilhafte Ausführungsform ist schematisch in Fig. 2 dargestellt. In einem stromdurchflossenen Leiter 1 ist ein Sicherungselement 2 mit einem Schmelzleiter angeordnet. Benachbart zum Sicherungselement 2 ist ein Auslöseelement 3 angeordnet, welches zum Auslösen der Sicherung 2 vorgesehen ist. Parallel zum Sicherungselement 2 ist ein Stromsensor 4 angeschlossen, der mit Anschlüssen 5.1 und 5.2 beidseits des Sicherungselements 2 mit der Leitung 1 verbunden ist. Mit den Anschlüssen 5.1, 5.2 wird die Spannung über dem Sicherungselement 2 abgegriffen, wobei aus dem Spannungswert der Strom durch das Sicherungselement 2 bestimmt wird.

Ein Transistor 8 ist mit seinem Emitter mit der Masse und mit seinem Kollektor mit dem Emitter eines weiteren Transistors 16 verbunden, der über die Leitung 6 mit dem Kontakt 3.2 der Auslöseeinheit 3 verbunden ist. Die Basis des Transistors 8 ist mit dem Stromsensor 4 verbunden. Die Basis des Transistors 16 ist mit einem Komparator 11 verbunden. Der Stromsensor 4 ist über eine nicht näher dargestellte interne Auslöseschaltung dazu vorgesehen, den Transistor 8 durchzuschalten, sofern ein Überstrom detektiert wird.

Die Auslöseeinheit 3 wird auch hier wieder insbesondere durch ein Heizelement mit einem Heizleiter gebildet, welcher das Sicherungselement 2 insbesondere im Bereich seines Schmelzleiters fremdbeheizen kann und der im Auslösefall den Schmelzleiter durch Wärmestrahlung zum Durchschmelzen bringt. Dabei wird das Sicherungselement 2 bei einem Nennstrom, der kleiner als oder höchstens gleich groß ist wie sein bauartbedingter nominaler Auslösestrom, zuverlässig ausgelöst.

Vorteilhaft werden übliche Schmelzsicherungen eingesetzt, welche aus einem definiert geformten elektrischen Leiter mit einem definierten Widerstand gebildet sind. Durch den Stromfluß wird der Leiter erhitzt, bevorzugt in einem speziell präparierten Schmelzleiter-Bereich, und erreicht, je nach Sicherungstyp, zwischen 420°C und über 1000°C seinen Schmelzpunkt. Das Aufschmelzen des Schmelzleiters führt zu einer Unterbrechung des Stromkreises. Häufig wird eine Zinnpille auf den Schmelzleiter aufgebracht, welche oberhalb von 230°C aufschmilzt und eine Reaktion mit dem Schmelzleitermaterial eingeht, die eine Erniedrigung des Schmelzpunktes des Schmelzleiters zur Folge hat.

Vorzugsweise wird der Heizleiter im eingeschalteten Zustand des Heizelements 3 mit der vollen Bordnetzspannung versorgt, während das Sicherungselement 2 einen möglichst geringen Spannungsabfall aufweist. Bei einem bevorzugten Spannungsabfall von 12 V über dem Heizleiter und einem bevorzugten Spannungsabfall von z.B. 200 mV über dem Sicherungselement 2 ergibt sich, daß durch das Heizelement 3 nur 1/60 des Stroms durch das Sicherungselement 2 fließt, so daß mit einem geringen Strom durch den Heizleiter ein hoher Strom durch das Sicherungselement 2 abschaltbar ist. Damit ist sichergestellt, daß insbesondere eine Fahrzeugbatterie einen Auslösestrom für ein Sicherungselement 2 aufbringen kann, auch wenn dieses hohe Nennströme aufweist.

Günstig ist auch, wenn das Heizelement 3 das Sicherungselement 2 selbst zusätzlich nur so weit erwärmt, daß der Schmelzleiter nahe an seiner Schmelztemperatur ist, so daß ein geringer Überstrom im Sicherungselement 2 bereits zur zuverlässgen Auslösung des Sicherungselementes 2 ausreicht.

Ein.bevorzugter Heizleiter des Heizelements 3 ist ein Widerstandsdraht oder ein Folienwiderstand oder ein Dickschichtwiderstand oder ein Kohlewiderstand oder ein sonstiges Element, welches bei elektrischem Stromfluß eine für ein Heizelement ausreichende Joulesche Wärme entwickelt. Vorzugsweise weist der Heizwiderstand im Bereich seines höchsten elektrischen Widerstands ein metallisches Element auf. Ein weitere bevorzugte Ausführung ist, wenn der Heizwiderstand im Bereich seines höchsten elektrischen Widerstands ein Halbleitermaterial aufweist. Dies hat den Vorteil, daß der Heizwiderstand in unmittelbarem Kontakt mit dem Schmelzleiter des Sicherungselements 2 sein kann, während sonst eine Isolierung oder eine andere Beabstandung notwendig ist. Zweckmäßigerweise ist die Isolierung hoch wärmeleitfähig; besonders geeignet sind Materialien wie AlN und/oder Al₂O₃ und/oder Halbleitermaterialien. Die elektrische Isolierung zwischen Heizleiter und Schmelzleiter des Sicherungselements 2 ermöglicht so die Ausnutzung der vollen Bordnetzspannung U_{bat} für den Heizleiter. Dabei kann das Heizelement 3 einseitig mit dem Sicherungselement elektrisch verbunden sein.

Eine weitere vorteilhafte Ausführung ist, wenn das Heizelement das Sicherungselement 2 selbst zusätzlich erwärmt, ohne den Schmelzleiter unmittelbar durchzuschmelzen. Die thermische Abstrahlung des Heizelements 3 wärmt die Schmelzsicherung 2 vor und bringt insbesondere den Schmelzleiter in die Nähe seiner Schmelztemperatur, so daß ein geringer Überstrom im Sicherungselement 2 bereits zur zuverlässigen Auslösung des Sicherungselements 2 führt.

Eine besonders günstige Ausführung ist, wenn das Heizelement 3 zumindest bereichsweise durch ein exothermes Reaktionselement, insbesondere eine Schweißfolie, gebildet ist. Eine exotherme, sich selbst erhaltende Reaktion des Reaktionselements wird durch einen Zündimpuls ausgelöst und zerstört das Reaktionselement. Vorteilhaft ist, daß sehr schnell sehr hohe Temperaturen erreichbar sind. Es ist ausreichend, die Reaktion an einer Stelle der Schweißfolie auszulösen.

Bevorzugt besteht die Schweißfolie aus einer Schichtfolge einer Mehrzahl von abwechselnd angeordneten, sehr dünnen Metallfolien, bevorzugt aus Aluminium und Nickel oder Aluminium und Eisen. Die einzelnen Folien sind vorzugsweise höchstens wenige nm dick. Der Vorteil dabei ist, daß durch ein von unerwünschten Betriebszuständen abhängiges Zündsignal eine stark exotherme Reaktion der Schweißfolie auslösbar ist, die wiederum den Schmelzleiter sehr schnell auf seine Schmelztemperatur aufheizt und damit der Stromkreis unterbrochen wird.

Der Temperaturfühler 9 aus einer Anordnung gemäß Fig. 1 ist in der Anordnung gemäß Fig. 2 durch den Heizleiter des Auslöseelements 3 selbst ersetzt. Der Heizleiter selbst ist nicht im Detail dargestellt. Die Temperatur des Sicherungselements 2 wird bestimmt, indem der Widerstand des Heizleiters bestimmt wird. Zweckmäßigerweise wird ein Heizleiter verwendet, dessen elektrischer Widerstand temperaturabhängig ist. Eine Stromsenke 15 zieht bei nichtaktiviertem Auslöseelement einen geringen Konstantstrom durch den Heizleiter des Auslöseelements 3 gegen Masse. Ein Komparator 11 greift innerhalb der Stromsenke 15 eine Spannung ab. Dieser Spannungsabfall ist dem Widerstandswert des Heilzleiters proportional. Aus der Temperaturabhängigkeit des Widerstandswerts läßt sich demnach die Temperatur des Sicherungselements 2 bestimmen. Überschreitet die Temperatur einen bestimmten Grenzwert Tₘₐₓ, so wird durch die Komparatoreinheit 11 der Transistor 16 durchgeschaltet. Nur wenn beide Transistoren 16 und 8 eingeschaltet sind, wird ein Stromfluß von Leiter 1 durch die Auslöseeinheit 3 und die Serienschaltung aus den durchgesteuerten Transistoren 8, 16 gegen Masse möglich und die Sicherung 2 aufgetrennt. Ist keiner oder nur einer der beiden Transistoren eingeschaltet, ist kein Stromfluß durch die Auslöseeinheit 3 möglich.

Gleichzeitig kann mit der Anordnung die Funktionsfähigkeit des Sicherungselements 2 überprüft werden. Falls kein Stromfluß möglich ist oder der Widerstand außerhalb eines vorgegebenen Bereichs liegt, ist die Sicherung beschädigt. Liegt ein solcher Fehler vor, kann z.B. ein Signal an eine Diagnoseeinheit weitergeleitet werden.

Eine weitere bevorzugte Möglichkeit zur Temperaturbestimmung des Sicherungselements 2 besteht darin, einen Materialübergang zwischen dem Sicherungselement und dem Heizleiter des Heizelements, insbesondere Kontakt 2.1, direkt als Kontakt eines Thermoelements zu nutzen. Die Temperatur und eine Temperaturänderung kann sehr genau erfaßt werden, da das Thermoelement in unmittelbarem thermischen Kontakt zu dem zu messenden Objekt steht. Der Kontakt 2.1 nach Fig. 2 stellt die elektrische Verbindungsstelle zwischen Leiter 1 und einem Anschluß des Heizleiters des Heizelements 3 dar, wobei der Leiter 1 z.B. aus Kupfer und der Heizleiter z.B. aus einer CrNi-Legierung bestehen kann.

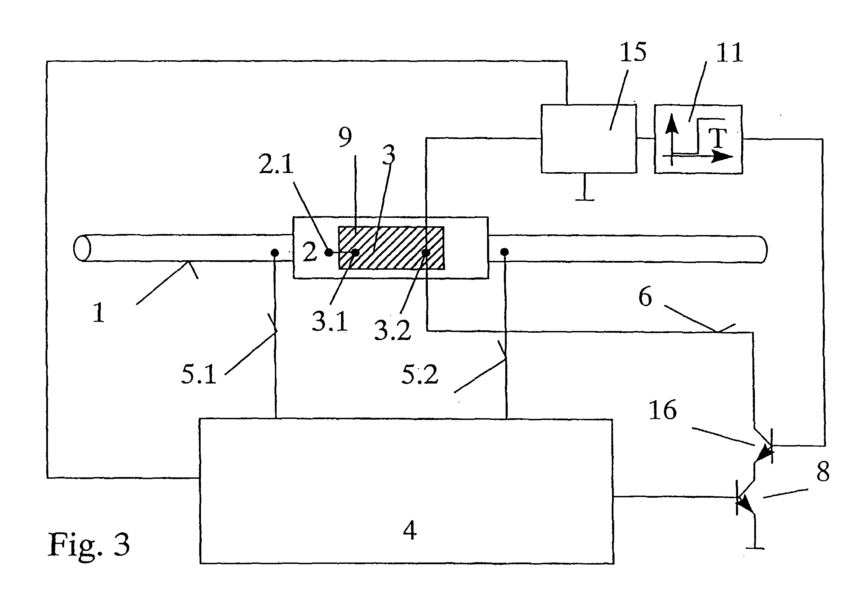

In Fig. 3 ist eine weitere günstig Ausführung der schematischen Anordnung aus Fig. 2 dargestellt. Die Anordnung unterscheidet sich von derjenigen gemäß Fig. 2 nur dadurch, daß die Konstantstromquelle 15 mit dem Stromsensor 4 verbunden ist. Diese Anordnung ermöglicht es, die Temperatur des Sicherungselements 2 zur Kalibirierung des Sicherungswiderstands zu verwenden und somit die Strommessung mittels des Stromsensors 4 zu verbessern und präziser zu machen.

Eine weitere günstige Ausführung ist, wenn der Schmelzleiter des Sicherungselements 2 selbst zumindest bereichsweise durch ein exothermes Reaktionselement, insbesondere eine Schweißfolie, gebildet ist. Ein bevorzugtes Auslöseelement 3 löst in diesem Fall das Reaktionselement durch einen Zündimpuls aus, vorzugsweise einen Lichtblitz oder einen Zündfunken, und das Reaktionselement zerstört sich durch seine selbsterhaltende, exotherme Reaktion und unterbricht den Stromfluß.

Eine weitere bevorzugte Ausführung ist, das Sicherungselement 2 als Bestandteil der Strommessung vorzusehen. Damit gelingt ein vorteilhafter, kompakter Aufbau der Anordnung.

Ein besonders vorteilhafte Ausgestaltung eines Heizelements als Auslöseelement 3 besteht darin, das Heizelement mit einer Steuerungseinheit zur variablen Einschaltung und/oder Steuerung der Heizleistung zu verbinden. Dies ermöglicht es, mit demselben Sicherungselement 2 unterschiedliche Charakteristiken und auch unterschiedliche nominale Auslöseströme nachzubilden, so daß die Auslösekurve des Sicherungselements 2 dynamisch veränderbar ist. Damit gelingt es vorteilhaft, ein Sicherungselement 2 unter unterschiedlichen Betriebsbedingungen optimal einzusetzen, insbesondere kann das gleiche Sicherungslement 2 dann für unterschiedlichste Belastungen des abzusichernden Leiters 1 eingesetzt werden. Damit ist es möglich, unterschiedliche Fahrzeuge oder Fahrzeugvarianten mit einer relativ einheitlichen elektrischen Schutzausrüstung zu versehen, womit die Fertigung vereinfacht und kostengünstiger wird.

Vorteilhaft ist es, zusätzliche Mittel vorzusehen, die die Auslöseeinheit 3 aufgrund zusätzlicher Fehlersignale einschaltbar machen, insbesondere Crash-Signale, um elektrische Verbraucher bei einem Unfall eines Fahrzeugs vom Bordnetz zu trennen und/oder andere Fehlersignale, vorzugsweise Überstromsignale zur Überstromüberwachung eines Verbrauchers und/oder Temperatursignale zur Übertemperaturüberwachung eines Verbrauchers. Durch das gesteuerte Einschalten des Zündsignals ist sichergestellt, daß im Normalbetrieb die Schmelzsicherung nicht versehentlich ausgelöst wird, im Fehlerfall dagegen sehr schnell und zuverlässig auslösbar ist.

## Patentansprüche

1. Verfahren zum Betreiben einer Schaltungsanordnung mit einem einen stromführenden Leiter (1) unterbrechenden Sicherungselement (2), bei welchem elektrische Parameter des Sicherungselements mittels Sensoren überwacht und in Abhängigkeit von dem erzeugten elektrischen Sensorsignal (4) das Sicherungselement ausgelöst und der Leiter unterbrochen wird, **dadurch gekennzeichnet, daß**
zusätzlich zu dem elektrischen Sensorsignal (4) wenigstens ein thermisches Sensorsignal (9) zur Messung der am Sicherungselement (2) auftretenden Temperatur erzeugt wird, und
die Sensorsignale (4, 9) oder hiervon abgeleitete Größen, insbesondere der aus der Temperatur abgeleitete Temperaturgradient, mit vorgegebenen Schwellwerten (Tₘₐₓ, ΔTₘₐₓ, Iₘₐₓ, Uₘₐₓ) verglichen werden und das Sicherungselement (2) ausgelöst wird, wenn mindestens ein elektrisches und ein thermisches Sensorsignal oder die jeweils abgeleiteten Größen den jeweils vorgegebenen Schwellwert erreicht haben.

2. Verfahren nach Anspruch 1, **dadurch gekennzeichnet, daß** das Sicherungselement (2) nur dann ausgelöst wird, wenn das thermische Sensorsignal (9) einen Temperatur-Schwellwert (Tₘₐₓ) und das elektrische Sensorsignal (4) einen Schwellwert des Stroms (Iₘₐₓ) durch das Sicherungselement (2) erreicht wird.

3. Verfahren nach einem der vorangehenden Ansprüche, **dadurch gekennzeichnet, daß** die vorgegebenen Schwellwerte veränderbar sind.

4. Verfahren nach Anspruch 3, **dadurch gekennzeichnet, daß** die vorgegebenen Schwellwerte aus einer Auslösekurve des Sicherungselements (2) abgeleitet sind und in einer Auswerteeinheit abgelegt sind.

5. Verfahren nach einem der vorangehenden Ansprüche, **dadurch gekennzeichnet, daß** zum Auslösen das Sicherungselement (2) zusätzlich erhitzt wird.

6. Verfahren nach einem der vorangehenden Ansprüche, **dadurch gekennzeichnet, daß** zum Auslösen ein Kurzschluß mittels eines Thyristors, Transistors oder ein Relais geschaltet wird und als Folge das Sicherungselement (2) von einem Zusatzstrom durchflossen wird.

7. Schaltungsanordnung zum Betreiben eines einen stromführenden Leiter (1) unterbrechenden Sicherungselements (2), wobei elektrische Parameter des Sicherungselements mittels wenigstens einer elektrischen Sensoreinheit (4) überwacht und in Abhängigkeit davon eine Auslöseeinheit (3) zum Auslösen des Sicherungselements automatisch gesteuert wird, **dadurch gekennzeichnet, daß**
zusätzlich zu der elektrischen Sensoreinheit (4) wenigstens eine thermische Sensoreinheit (9) zur Messung der am Sicherungselement (2) auftretenden Temperatur vorgesehen ist,
und daß die Sensoreinheiten (4, 9) die Auslöseeinheit (3) logisch 'UND'-verknüpft steuern.
wenigstens eine Auswerteeinheit vorgesehen ist, in der die von den Sensoreinheiten erzeugten Sensorsignale oder hiervon abgeleitete Größen, insbesondere der aus der Temperatur abgeleitete Temperaturgradient, mit vorgegebenen Schwellwerten (Tₘₐₓ, ΔTₘₐₓ, Iₘₐₓ, Uₘₐₓ) verglichen werden und die in Abhängigkeit von dem Vergleichsergebnis Schalteinrichtungen (7,8) ansteuert, die elektrisch in Serie mit der Auslöseeinheit geschaltet sind.

8. Schaltungsanordnung nach Anspruch 7, **dadurch gekennzeichnet, daß** die Auslöseeinheit (3) Bestandteil einer der Sensoreinheiten (9) zur Temperaturmessung und/oder zur Bestimmung eines Temperaturgradienten ist.

9. Schaltungsanordnung nach Anspruch 7, **dadurch gekennzeichnet, daß** das Sicherungselement (2) Bestandteil einer Sensoreinheit (9) zur Temperaturmessung und/ oder zur Bestimmung eines Temperaturgradienten ist.

10. Schaltungsanordnung nach einem der vorangegangenen Ansprüche 7 bis 9, **dadurch gekennzeichnet, daß** die Auslöseeinheit (3) ein Heizelement zum Fremdbeheizen und/oder Durchschmelzen des Sicherungselements (2) ist.

11. Schaltungsanordnung nach Anspruch 10, **dadurch gekennzeichnet, daß** das Heizelement (3) einen Widerstandsdraht und/oder einen Halbeiter und/oder einen Folienwiderstand und/oder einen Dickschichtwiderstand und/oder einen Kohlewiderstand und/oder ein exothermes Reaktionselement aufweist.

12. Schaltungsanordnung nach einem der vorangegangenen Ansprüche, **dadurch gekennzeichnet, daß** die Auslöseeinheit (3) ein ein Thyristor oder ein Transistor oder ein Relais zum Schalten einer Kurzschluß - Stromerhöhung durch das Sicherungselement (2) ist.

13. Schaltungsanordnung nach einem der vorangegangenen Ansprüche 7 bis 12, **dadurch gekennzeichnet, daß** das Sicherungselement (2) einem zum Schmelzen vorgesehenen Bereich aufweist, an dem alsAuslöseeinheit (3) ein exothermes Reaktionselement angeordnet ist.

14. Schaltungsanordnung nach Anspruch 11 oder 13, **dadurch gekennzeichnet, daß** das exotherme Reaktionselement Aluminium und Eisen und/oder Nickel aufweist.

15. Schaltungsanordnung nach einem der vorangegangenen Ansprüche 7 bis 14, **dadurch gekennzeichnet, daß** die thermischen Sensoreinheiten (9) einen PT100-Widerstand und/oder einen Bipolartransistor und/oder eine pn-Diode und/oder ein Thermoelement als Temperaturfühler aufweisen.

16. Schaltungsanordnung Anspruch 15, **dadurch gekennzeichnet, daß** der Temperaturfühler aus einem Heizleiter besteht, aus dessen elektrischen Widerstand die aktuelle Temperatur des Sicherungselements (2) ableitbar ist.

17. Schaltungsanordnung nach Anspruch 7 oder 15, **dadurch gekennzeichnet, daß** das Sicherungselement (2) mit einem Heizleiter einen Materialkontakt bildet, welcher ein Meßkontakt eines Thermoelements ist.

18. Schaltungsanordnung nach einem der vorangegangenen Ansprüche 7 bis 17, **dadurch gekennzeichnet, daß** benachbart zu dem in Serie mit dem Leiter (1) geschalteten Sicherungselement (2) die Auslöseeinheit (3) angeordnet ist, wobei parallel zu dem Sicherungselement (2) die elektrische Sensoreinheit (4) zur Strommessung und ein erster Transistor (8), dessen Basis mit der elektrischen Sensoreinheit (4), dessen Emitter mit Masse und dessen Kollektor mit einem zweiten Kontakt (3.2) des Auslöseelements (3) verbunden ist, sowie ein erster Kontakt (3.1) des Auslöseelements (3) mit dem Kollektor eines zweiten Transistors (7), der Emitter des zweiten Transistors (7) mit einer Spannungsversorgung (U_{Bat}) und dessen Basis mit einem in Serie mit der Auswerteeinheit (10) geschalteten Komparator (11) und die Auswerteeinheit (10) mit einem benachbart zum Sicherungselement (2) angeordneten thermischen Sensoreinheit (9) zur Temperaturmessung verbunden ist.

19. Schaltungsanordnung nach einem der vorangegangenen Ansprüche 7 bis 17, **dadurch gekennzeichnet, daß** benachbart zu dem in Serie mit dem Leiter (1) geschalteten Sicherungselement (2) die Auslöseeinheit (3) angeordnet ist, wobei parallel zu dem Sicherungselement (2) die elektrische Sensoreinheit (4) zur Strommessung angeordnet ist, der Kollektor eines ersten Transistors (16) mit einem zweiten Kontaktpunkt (3.2) der Auslöseeinheit (3), dessen Emitter mit dem Kollektor eines zweiten Transistors (8), die Basis des zweiten Transistors (8) mit der elektrischen Sensoreinheit (4) und der Emitter des zweiten Transistors (8) mit Masse verbunden ist, ein erster Kontakt (3.1) der Auslöseeinheit (3) mit einem ersten Kontakt (2.1) des Sicherungselements (2), der zweite Kontaktpunkt (3.2) mit einer Konstantstromquelle (15) und einem Komparator (11) verbunden ist, wobei der Komparator (11) mit der Basis des ersten Transistors (16) verbunden ist.

20. Schaltungsanordnung nach Anspruch 19, **dadurch gekennzeichnet, daß** die Stromquelle (15) zusätzlich direkt mit der elektrischen Sensoreinheit (4) zur Strommessung verbunden ist.

## Claims

1. Method of operating a circuit arrangement with a fuse element (2) interrupting a current-conducting conductor (1), in which electrical parameters of the fuse element are monitored by means of sensors and the fuse element is triggered and the conductor interrupted in dependence on the electrical sensor signal (4) which is produced, **characterised in that** in addition to the electrical sensor signal (4) at least one thermal sensor signal (9) for measurement of the temperature arising at the fuse element (2) is produced, and the sensor signals (4, 9) or magnitudes derived therefrom, particularly the temperature gradient derived from the temperature, are compared with predetermined threshold values (Tₘₐₓ, ΔTₘₐₓ, Iₘₐₓ, Uₘₐₓ) and the fuse element (2) is triggered when at least one electrical and one thermal sensor signal or the respective magnitudes derived therefrom have reached the respectively predetermined threshold value.

2. Method according to claim 1, **characterised in that** the fuse element (2) is triggered only when the thermal sensor signal (9) has reached a temperature threshold value (Tₘₐₓ) and the electrical sensor signal (4) has reached a threshold value of the current (Iₘₐₓ) through the fuse element (2).

3. Method according to one of the preceding claims, **characterised in that** the predetermined threshold values are variable.

4. Method according to claim 3, **characterised in that** the predetermined threshold values are derived from a trigger curve of the fuse element (2) and filed in an evaluating unit.

5. Method according to one of the preceding claims, **characterised in that** the fuse element (2), for triggering, is additionally heated.

6. Method according to one of the preceding claims, **characterised in that**, for triggering, a short-circuit is connected by means of a thyristor, transistor or relay and as a consequence the fuse element (2) is flowed through by an additional current.

7. Circuit arrangement for operating a fuse element (2) interrupting a current-conducting conductor (1), wherein electrical parameters of the fuse element are monitored by means of at least one electrical sensor unit (4) and in dependence thereon a trigger unit (3) for triggering the fuse element is automatically controlled, **characterised in that** in addition to the electrical sensor unit (4) at least one thermal sensor unit (9) for measuring the temperature arising at the fuse element (2) is provided and that the sensor units (4, 9) control the trigger unit (3) in logical AND-linked manner, [wherein] at least one evaluating unit is provided, in which the sensor signals produced by the sensor units or magnitudes derived therefrom, particularly the temperature gradient derived from the temperature, are compared with threshold values (Tₘₐₓ, ΔTₘₐₓ, Iₘₐₓ, Uₘₐₓ) and which in dependence on the comparison result controls switching devices (7, 8) electrically connected in series with the trigger unit.

8. Circuit arrangement according to claim 7, **characterised in that** the trigger unit (3) is a component of one of the sensor units (9) for temperature measurement and/or determination of a temperature gradient.

9. Circuit arrangement according to claim 7, **characterised in that** the fuse element (2) is a component of a sensor unit (9) for temperature measurement and/or determination of a temperature gradient.

10. Circuit arrangement according to one of the preceding claims 7 to 9, **characterised in that** the trigger unit (3) is a heating element for external heating and/or melting through of the fuse element (2).

11. Circuit arrangement according to claim 10, **characterised in that** the heating element (3) comprises a resistance wire and/or a semiconductor and/or a film resistor and/or a thick-film resistor and/or a carbon resistor and/or an exothermic reaction element.

12. Circuit arrangement according to one of the preceding claims, **characterised in that** the trigger unit (3) is a thyristor or a transistor or a relay for switching a short-circuit current increase through the fuse element (2).

13. Circuit arrangement according to one of the preceding claims 7 to 12, **characterised in that** the fuse element (2) has a region, which is provided for fusing and at which an exothermic reaction element is arranged as trigger unit (3).

14. Circuit arrangement according to claim 11 or 13, **characterised in that** the exothermic reaction element comprises aluminium and iron and/or nickel.

15. Circuit arrangement according to one of the preceding claims 7 to 14, **characterised in that** the thermal sensor units (9) comprise a PT100 resistor and/or a bipolar transistor and/or a pn diode and/or a thermoelement as temperature detector.

16. Circuit arrangement [according to] claim 15, **characterised in that** the temperature detector consists of a heat conductor, the actual temperature of the fuse element (2) being derivable from the electrical resistance of the heat conductor.

17. Circuit arrangement according to claim 7 or 15, **characterised in that** the fuse element (2) together with a heat conductor forms a material contact which is a measuring contact of a thermoelement.

18. Circuit arrangement according to one of the preceding claims 7 to 17, **characterised in that** the trigger unit (3) is arranged adjacent to the fuse element (2) connected in series with the conductor (1), wherein parallel to the fuse element (2) are the electrical sensor unit (4) for current measurement and a first transistor (8), the base of which is connected with the electrical sensor unit (4), the emitter of which is connected with ground and the collector of which is connected with a second contact (3.2) of the trigger unit (3), and a first contact (3.1) of the trigger element (3) is connected with the collector of a second transistor (7), the emitter of the second transistor (7) is connected with a voltage supply (U_{Bat}) and the base of the second transistor is connected with a comparator (11) connected in series with the evaluating unit (10), the evaluating unit (10) being connected with a thermal sensor unit (9), which is arranged adjacent to the fuse element (2), for temperature measurement.

19. Circuit arrangement according to one of the preceding claims 7 to 17, **characterised in that** the trigger unit (3) is arranged adjacent to the fuse element (2) connected in series with the conductor (1), wherein the electrical sensor unit (4) for current measurement is arranged parallel to the fuse element (2), the collector of a first transistor (16) is connected with a second contact point (3.2) of the trigger unit (3), the emitter of the first transistor is connected with the collector of a second transistor (8), the base of the second transistor (8) is connected with the electrical sensor unit (4) and the emitter of the second transistor (8) is connected with ground, a first contact (3.1) of the trigger unit (3) being connected with a first contact (2.1) of the fuse unit (2) and the second contact point (3.2) of the trigger unit being connected with a constant current source (15) and a comparator (11), wherein the comparator (11) is connected with the base of the first transistor (16).

20. Circuit arrangement according to claim 19, **characterised in that** the current source (15) is additionally connected directly with the electrical sensor unit (4) for current measurement.

## Revendications

1. Procédé de fonctionnement d'un agencement de commutation avec un fusible (2) interrompant un conducteur de courant (1), dans lequel des paramètres électrique du fusible sont surveillés par des capteurs et, en fonction du signal de capteur électrique produit (4), le fusible est déclenché et le conducteur est interrompu, **caractérisé en ce**
**qu'**il est produit en plus du signal de capteur électrique (4) au moins un signal de capteur thermique (9) pour la mesure de la température produite au fusible (2) et
**en ce que** les signaux de capteur (4,9) ou des grandeurs dérivées de ceux-ci, notamment le gradient de température dérivé de la température, sont comparés avec des valeurs seuil prédéfinies (Tₘₐₓ, ΔTₘₐₓ, Iₘₐₓ, Uₘₐₓ) et que le fusible (2) est déclenché lorsqu'au moins un signal de capteur électrique et thermique ou les grandeurs respectivement dérivées ont atteint la valeur seuil respectivement prédéfinie.

2. Procédé selon la revendication 1, **caractérisé en ce que** le fusible (2) est seulement déclenché lorsque le signal de capteur thermique (9) atteint une valeur seuil de température. (Tₘₐₓ) et le signal de capteur électrique (4) une valeur seuil du courant (Iₘₐₓ) à travers le fusible (2).

3. Procédé selon l'une des revendications précédentes, **caractérisé en ce que** les valeurs seuil prédéfinies sont modifiables.

4. Procédé selon la revendication 3, **caractérisé en ce que** les valeurs seuil prédéfinies sont dérivées d'une courbe de déclenchement du fusible (2) et sont stockées dans une unité d'évaluation.

5. Procédé selon l'une des revendications précédentes, **caractérisé en ce que** pour le déclenchement, le fusible (2) est chauffé additionnellement.

6. Procédé selon l'une des revendications précédentes, **caractérisé en ce que** pour le déclenchement d'un court-circuit, on commute au moyen d'un thyristor, d'un transistor ou d'un relais et que de ce fait, le fusible (2) est traversé par un courant additionnel.

7. Agencement de commutation pour le fonctionnement d'un fusible (2) interrompant un conducteur de courant (1), où des paramètres électriques du fusible sont surveillés avec au moins une unité de capteur électrique (4) et, en fonction de ceux-ci, une unité de déclenchement (3) pour déclencher le fusible est commandée automatiquement, **caractérisé en ce**
**qu'**il est prévu en plus de l'unité de capteur électrique (4) au moins une unité de capteur thermique (9) pour la mesure de la température produite au fusible (2),
et **que** les unités de capteur (4, 9) commandent l'unité de déclenchement (3) selon une opération logique "ET",
**en ce qu**'il est prévu au moins une unité d'évaluation dans laquelle les signaux de capteur produits par les unités de capteur ou des grandeurs dérivées de ceux-ci, notamment le gradient de température dérivé de la température, sont comparés avec des valeurs seuil prédéfinies (Tₘₐₓ, ΔTₘₐₓ, Iₘₐₓ, Uₘₐₓ) et qui, en fonction du résultat de la comparaison, commande des installations de commutation (7,8) qui sont montées électriquement en série avec l'unité de déclenchement.

8. Agencement de commutation selon la revendication 7, **caractérisé en ce que** l'unité de déclenchement (3) est un composant d'une des unités de capteur (9) pour la mesure de la température et/ou pour la détermination d'un gradient de température.

9. Agencement de commutation selon la revendication 7, **caractérisé en ce que** le fusible (2) est un composant d'une unité de capteur (9) pour la mesure de la température et/ou pour la détermination d'un gradient de température.

10. Agencement de commutation selon l'une des revendications 7 à 9, **caractérisé en ce que** l'unité de déclenchement (3) est un élément chauffant pour le chauffage extérieur et/ou la fusion du fusible (2).

11. Agencement de commutation selon la revendication 10, **caractérisé en ce que** l'élément chauffant (3) présente un fil de résistance et/ou un semi-conducteur et/ou une résistance de feuille et/ou une résistance de couche épaisse et/ou une résistance de carbone et/ou un élément de réaction exotherme.

12. Agencement de commutation selon l'une des revendications précédentes, **caractérisé en ce que** l'unité de déclenchement (3) est un thyristor ou un transistor ou un relais pour la commutation d'une augmentation de courant de court-circuit par l'élément de sécurité (2).

13. Agencement de commutation selon l'une des revendications précédentes 7 à 12, **caractérisé en ce que** le fusible (2) présente une zone prévue pour la fusion à laquelle est disposé comme unité de déclenchement (3) un élément de réaction exotherme.

14. Agencement de commutation selon la revendication 11 ou 13, **caractérisé en ce que** l'élément de réaction exotherme présente de l'aluminium et du fer et/ou du nickel.

15. Agencement de commutation selon l'une des revendications précédentes 7 à 14, **caractérisé en ce que** les unités de capteur thermiques (9) présentent une résistance PT100 et/ou un transistor bipolaire et/ou une diode pn et/ou un thermo-élément comme capteur de température.

16. Agencement de commutation selon la revendication 15, **caractérisé en ce que** le capteur de température est constitué d'un conducteur chauffant à partir de la résistance électrique duquel, la température actuelle du fusible (2) peut être déduite.

17. Agencement de commutation selon la revendication 7 ou 15, **caractérisé en ce que** l'élément de sécurité (2) forme avec un conducteur chauffant un contact de matériau qui est un contact de mesure d'un thermo-élément.

18. Agencement de commutation selon l'une des revendications précédentes 7 à 17, **caractérisé en ce qu'**il est disposé au voisinage du fusible (2) monté en série avec le conducteur (1) l'unité de déclenchement (3), où parallèlement au fusible (2), l'unité de capteur électrique (4) pour la mesure du courant et un premier transistor (8), dont la base est reliée à l'unité de capteur électrique (4), dont l'émetteur est relié à la masse et dont le collecteur est relié à un deuxième contact (3.2) de l'élément de déclenchement (3), ainsi qu'un premier contact (3.1) de l'élément de déclenchement (3) est relié au collecteur d'un deuxième transistor (7), l'émetteur du deuxième transistor (7) a une alimentation en tension (U_{bat}) et sa base à un comparateur (11) monté en série avec l'unité d'évaluation (10), et l'unité d'évaluation (10) à une unité de capteur thermique (9) disposée au voisinage du fusible (2), pour la mesure de la température.

19. Agencement de commutation selon l'une des revendications précédentes 7 à 17, **caractérisé en ce que**, au voisinage du fusible (2) monté en série avec le conducteur (1), est disposée l'unité de déclenchement (3), où est disposée parallèlement au fusible (2) l'unité de capteur électrique (4) pour la mesure du courant, le collecteur d'un premier transistor (16) est relié à un deuxième point de contact (3.2) de l'unité de déclenchement (3) dont l'émetteur est relié au collecteur d'un deuxième transistor (8), la base du deuxième transistor (8) à l'unité de capteur électrique (4) et l'émetteur du deuxième transistor (8) à la masse, un premier contact (3.1) de l'unité de déclenchement (3) est relié à un premier contact (2.1) du fusible (2), le deuxième point de contact (3.2) à une source de courant constant (15) et à un comparateur (11), où le comparateur (11) est relié à la base du premier transistor (16).

20. Agencement de commutation selon la revendication 19, **caractérisé en ce que** la source de courant (15) est reliée additionnellement directement à l'unité de capteur électrique (4) pour la mesure du courant.
